# EUROPEAN PATENT SPECIFICATION

(11) **EP 3 977 089 B1**
(45) Date of publication and mention of the grant of the patent: **27.09.2023**
(21) Application number: 20721834.8
(22) Date of filing: 20.04.2020
(51) Int. Cl.: G01N 1/22, G01N 30/24, G01N 1/40

(54) **DEVICE FOR AUTOMATIC SAMPLING OF ORGANIC CONTAMINATING COMPOUNDS DISPERSED IN GASEOUS FLUIDS AND/OR LIQUIDS AND RELATIVE METHOD OF OPERATION**
VORRICHTUNG ZUR AUTOMATISCHEN PROBENAHME VON ORGANISCHEN KONTAMINIERENDEN VERBINDUNGEN, DIE IN GASFÖRMIGEN FLUIDEN UND/ODER FLÜSSIGKEITEN DISPERGIERT SIND, UND ZUGEHÖRIGES VERFAHREN ZUM BETRIEB
DISPOSITIF D'ÉCHANTILLONNAGE AUTOMATIQUE DE COMPOSÉS CONTAMINANTS ORGANIQUES DISPERSÉS DANS DES FLUIDES ET/OU LIQUIDES GAZEUX ET PROCÉDÉ DE FONCTIONNEMENT ASSOCIÉ

(30) Priority: 31.05.2019 IT 201900007773
(43) Date of publication of application: 06.04.2022
(73) Proprietor: Consiglio Nazionale Delle Ricerche, 00185 Roma (RM) (IT)
(72) Inventor: D'AGOSTINO, Fabio, 00185 Roma (RM) (IT); ZORA, Marco, 00185 Roma (RM) (IT); SPROVIERI, Mario, 00185 Roma (RM) (IT); ZAFFUTO, Alfonso, 00185 Roma (RM) (IT); DRAGO, Rodolfo, 90142 Palermo (PA) (IT)
(74) Representative: Tiburzi, Andrea
(86) International application number: PCT/IT2020/050099
(87) International publication number: WO 2020/240600

(56) References cited:
- WO-A1-2019/036414
- WO-A2-2007/032039
- US-A1- 2014 366 651
- CHEN Y ET AL: "SOLID-PHASE MICROEXTRACTION FIELD SAMPLER", ANALYTICAL CHEMISTRY, AMERICAN CHEMICAL SOCIETY, US, vol. 76, no. 22, 15 November 2004 (2004-11-15), pages 6823-6828, XP001225818, ISSN: 0003-2700, DOI: 10.1021/AC0490806

## Description

This invention relates a device for the automatic sampling of organic contaminating compounds dispersed in gaseous fluids and liquids, in particular by means of the SPME *(Solid Phase Micro Extraction)* technique.

The invention also relates to a method for operation of said device.

More in detail, the invention relates to a portable device of the said type, designed and made in particular to carry out a sampling and monitoring over time in indoor or outdoor environments, of organic contaminating compounds dispersed in the air, but also generally in gaseous fluids or liquids, by means of the SPME passive sampling technique, but which can be used for any place, where the detection of contaminating compounds dispersed in gaseous fluids and/or liquids is necessary.

The description below relates to a device placed in open environments for the sampling and monitoring over time of organic contaminating compounds dispersed in the air, but it is clear that it should not be considered limited to this specific use.

As is currently well known, the passive sampling technique known as SPME *(Solid Phase Micro Extraction*) consists of using a solid substance, usually a particular type of coating attached to a fibre, to detect one or more gaseous or liquid phase analytes.

The fibre is usually retractable, stored inside a hollow needle, and then extracted and exposed to the sample to be analysed or immersed in it.

After a predetermined time interval necessary for the extraction, the fibre is withdrawn and the adsorbed analytes are then thermally desorbed by heating the fibre or by dissolution with solvents.

In particular, for the analysis of liquid and/or solid organic contaminating compounds which are placed in special glass tubes with a perforated cap called *vials*, the sampling of the contaminants takes place by exposing the fibre inside the *vials* in headspace mode, according to the prior art technique HS-SPME *(Head Space* - *Solid Phase Micro Extraction*), that is to say, in the air/vapour space between the liquid layer and the cap, or by direct immersion in the liquid, according to the prior art technique DI-SPME *(Direct immersion* - *Solid Phase Micro Extraction*).

The fibre consists of a metal core, or a glass core, that is, siliceous, coated with a polymeric film, or coating, which by chemical or physical affinity absorbs at ambient temperature the organic substances dispersed in the fluid with which it comes into contact.

These organic substances or contaminants remain attached until, by desorption at high temperature, for example approximately 250°C, or by solubilisation in polar/nonpolar type organic solvents, the organic contaminants detach from the fibre to be detected by prior art analytical chemical techniques such as GC (*Gas Chromatography*) or HPLC *(High Precision Liquid Chromatography).*

Moreover, this desorption process cleans the fibres and makes them active again for a subsequent sampling.

As is well known, the current SPME technique is manual, as it is necessary for an operator to manually expose the fibre in the environment whether closed or open, at a predetermined sampling point.

Currently, the SPME sampling technique is used in manual mode for in-situ sampling of the air, outdoor or indoors, of liquids for environmental surveys such as industrial/municipal waste, watercourses, urban waste disposal sites, and the like, in the chemical/food/cosmetic industry for the investigation of possible contaminants.

It is clear that this manual technique is difficult to use for monitoring contaminants over time, that is, during both day and night, as it would require the presence of an operator at the sampling site at all the hours set in the monitoring programme.

Moreover, this sampling technique requires that the analysis of the sample is performed as quickly as possible to avoid any desorption of the contaminants adsorbed in the fibre, which would cause possible loss of samples.

The relevant prior art also includes the patent application US 2014/366651 A1.

In light of the above, the aim of the invention to provide a device to automate the SPME sampling technique, so as to expose the fibres in an automatic and programmed manner over time.

Another aim of the invention is to provide a device which allows the desorption of contaminants to be limited, so as to preserve the collected sample.

Another aim of the invention is to provide a device which can be quickly and easily coupled to the prior art bench top instrumentation for analysis of the collected sample.

A further aim of the invention is to provide the instruments and the method of operation of said device.

The specific object of the present invention is therefore a device for the sampling of organic contaminating compounds dispersed in gaseous fluids and/or liquids comprising at least one sampling means comprising at least one fibre capable of moving from a retracted position, in which it is placed inside said sampling means, to an extracted position, in which it is immersed in said fluid, in order to detect said organic contaminating compounds, according to predetermined exposure times of said fibre in said fluid, said device comprising actuation means for moving said fibre from said retracted position to said extracted position and vice versa.

Further, according to the invention, said device may comprise a supporting member, provided with two or more housings, each configured to house a respective sampling means, and said actuation means are configured to move a fibre housed in a first housing from said retracted position to said extracted position and vice versa, and to move subsequently a fibre housed in a second housing from said retracted position to said extracted position and vice versa.

Again according to the invention, said device can comprise a logic control unit equipped with a program containing predetermined exposure times, capable of activating said actuation means to cause the exposure of said at least one fibre in said fluid for said predetermined exposure time intervals.

Preferably according to the invention, said logic control unit program controls the exposure times of all fibres contained in said housings.

Further according to the invention, said supporting member and said actuation means are coupled in rotation with each other.

Again according to the invention, said supporting member comprises a fixed portion, a mobile portion equipped with two or more housings, able to rotate with respect to said fixed portion, a circular gearwheel integral with said mobile portion, in order to couple with said actuation means.

Preferably according to the invention, said actuation means comprise a first motor, equipped with a gearwheel, a second motor, a third motor, a first worm screw, coupled to said second motor, a second worm screw, coupled to said third motor, first lever, able to move along said first worm screw from a stroke start position to a stroke end position, and a second lever, able to move along said second worm screw from a stroke start position to a stroke end position.

Further according to the invention, said gear wheel of said first motor and said circular gear wheel of said movable supporting member are meshed together, so as to rotate said movable supporting member until reaching a predetermined position.

Again according to the invention, said device may comprise a sampling device comprising a hollow and elongated outer casing, comprising said sampling means, equipped with a first and a second end, capable of moving in a vertical direction from a raised to a lowered position, a spring, coupled to said outer casing, capable of being extended when said outer casing is in said raised position, and compressed when said outer casing is in said lowered position, and said sampling means may comprise a container, a plunger, slidably coupled to said container, a needle, located inside said container and containing said fibre, and a spring, coupled to said plunger for the escape of said fibre from said needle.

Preferably according to the invention, said first lever, in said stroke start position is distant from said first end of said outer casing, and in said stroke end position is in contact on said first end of said outer casing, for the escape of said needle from said container, and said second lever, in said stroke start position is distant from said plunger of said sampling means, and in said stroke end position is in contact on said plunger for the escape of said fibre from said needle.

Further according to the invention, each housing of said supporting member is provided with a watertight chamber comprising a containment structure, in which is made a through hole, a first membrane, placed beneath said through hole, a second membrane, placed beneath said first membrane, and a spacer element, placed between said first and second membranes.

Again according to the invention, said first and second membranes are made of elastic plastic material, which can be passed through by said needle.

Another object of the invention is a method of operation of a device for the sampling of organic contaminating compounds dispersed in gaseous fluids and/or liquids, comprising the following steps:
a. moving said first, second and third motors to an initial position;
b. selecting the fibre to take the measurement;
c. extracting the tip of the needle corresponding to the selected fibre out of the device, at a predetermined speed;
d. exposing said selected fibre in the outside environment at a predetermined speed;
e. retracting said fibre inside said needle and said needle inside said device;
f. stopping said device for a predetermined period of time.

The invention is now described, by way of example and without limiting the scope of the invention, according to its preferred embodiments, with particular reference to the accompanying drawings, in which:
Figure 1 shows a front view of the portable device for the automatic sampling of organic contaminating compounds dispersed in gaseous fluids and/or liquids, according to the invention;
Figure 2 shows a perspective view from below of the device of Figure 1;
Figure 3 shows a front view of the device of Figure 1, coupled to an external support;
Figure 4 shows a side view of the device of Figure 1, without the cover casing;
Figure 5 shows a front view of a detail of Figure 4;
Figure 6 shows a front perspective view of a component of the device shown in Figure 5;
Figure 7 shows a top view of the component of the device shown in Figure 6;
Figure 8 shows a top view of the component of the device shown in figure 5, equipped with drive motors;
Figure 9 shows a view from below of the component shown in Figure 8;
figure 10 shows a front section view of another component of the device shown in Figure 5;
Figure 11 shows a front perspective view of the component shown in Figure 10;
Figure 12 shows a front view of a detail of Figure 10;
Figure 13 shows a schematic front view of a portion of the component shown in Figure 10;
Figure 14 shows a front view of the component shown in figure 10, in a first position;
Figure 15 shows a front perspective view of the component shown in Figure 14, in a first position;
Figure 16 shows the detail of Figure 5, in a first position;
Figure 17 shows a perspective view from below of the device shown in Figure 4, in a first position;
Figure 18 shows a front view of the component shown in Figure 10, in a second position;
Figure 19 shows a front perspective view of the component shown in Figure 14, in a second position;
Figure 20 shows the detail of Figure 5, in a second position;
Figure 21 shows a perspective view from below of the device shown in Figure 4, in a second position;
Figure 22 shows a front view of the component shown in Figure 10, in a third position;
Figure 23 shows a front perspective view of the component shown in figure 14, in a third position;
Figure 24 shows the detail of Figure 5, in a third position;
Figure 25 shows a perspective view from below of the device shown in Figure 4, in a third position.

The similar parts will be indicated in the various drawings with the same numerical references.

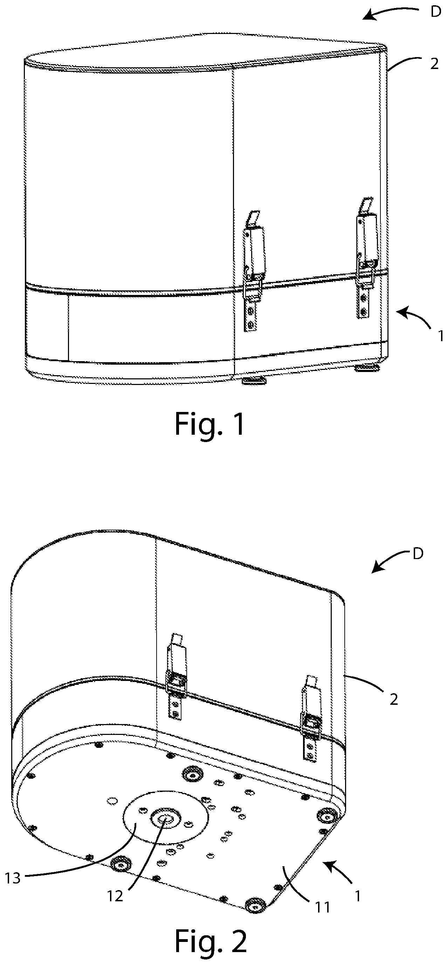

With reference to Figures 1 to 5, the device D for the automatic sampling of organic contaminating compounds dispersed in gaseous fluids and/or liquids, which is the object of the invention, essentially comprises a support base 1, a cover casing 2, a movable supporting member 3, at least one sampling element 4 for the sampling of organic compounds, coupled to said supporting member 3, means 5 of actuation of said at least one sampling element 4 and of said supporting member 3, and a logic control unit, located inside said device D, not shown in the drawings, in which the operating program of said device D is stored.

In particular, said support base 1 for device D comprises a first 1ₐ and a second 1_{b} portion and a lower surface 11, beneath said first 1ₐ and second 1_{b} portion.

A through hole 12 through which a part of said sampling element 4 passes, as will be described in detail below, is made on said lower surface 11.

Said hole 12 has a diameter of approximately 2 mm.

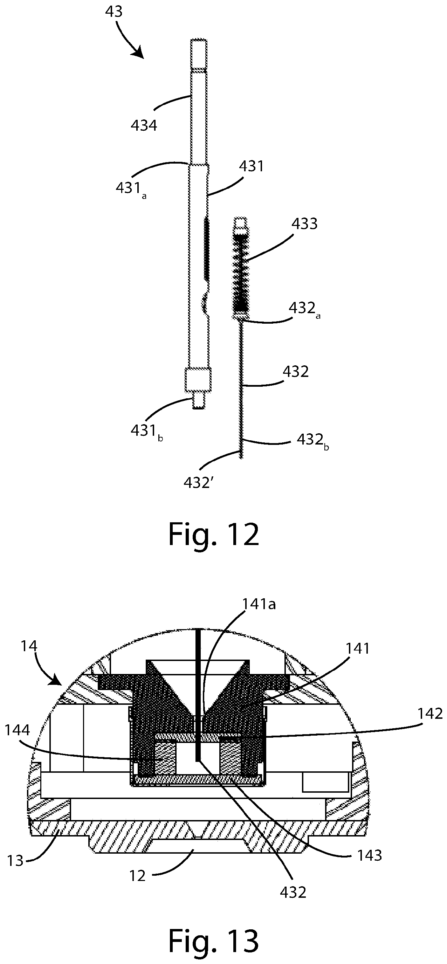

Referring in particular to Figure 13, at said through hole 12, inside said base 1, there is a watertight chamber 14 of which all the housings included in the supporting member 3 are provided.

Said watertight chamber 14 has a volume, within a range of 0-100 micro-litres, which is variable according to the structure of the silicone baffle.

The purpose of said watertight chamber 14 is to limit the desorption of the sampled substances so that chemical analysis can be carried out after 24 or 48 hours without substantial loss of sample.

In particular, said watertight chamber 14 comprises a containment structure 141, in which is made a through hole 141ₐ, a first membrane 142, placed beneath said through hole 141ₐ, a second membrane 143, placed beneath said first membrane 142, and a spacer element 144, placed between said first 142 and second 143 membranes.

Said first 142 and second 143 membranes are made of elastic plastic material, for example rubber or silicone, which can be easily passed through, in and out, by the tip of a needle, without permanent perforations, therefore not closable.

In addition, a coupling plate 13 is fixed on said lower surface 11 in order to realize the coupling between said device D and other laboratory instruments external to the device D itself.

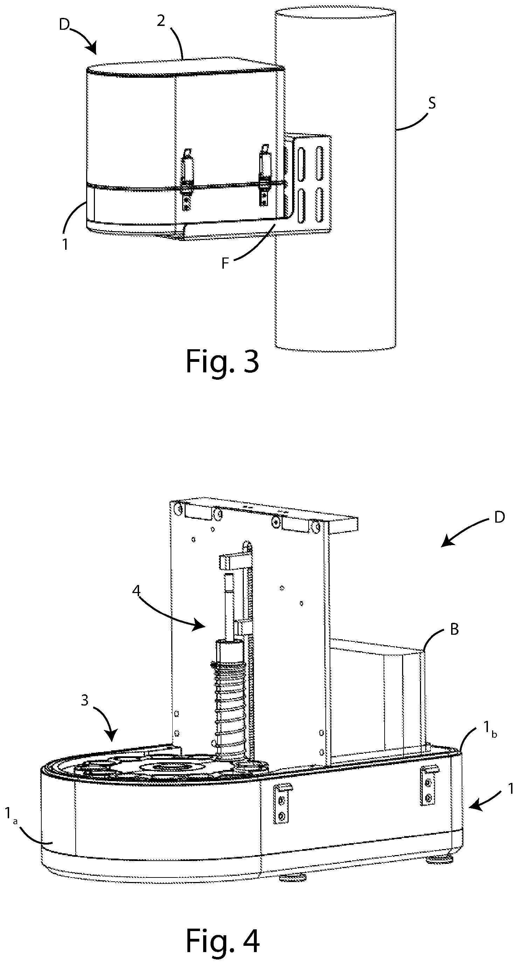

As shown in figure 3, said device D can also be installed on an external support S, by means of a fixing bracket F.

Said supporting member 3 is placed in said first portion 1ₐ of said base 1, a battery B is placed in said second portion 1_{b} of said base 1 and said actuation means 5, which are substantially placed between said supporting member 3 and battery B.

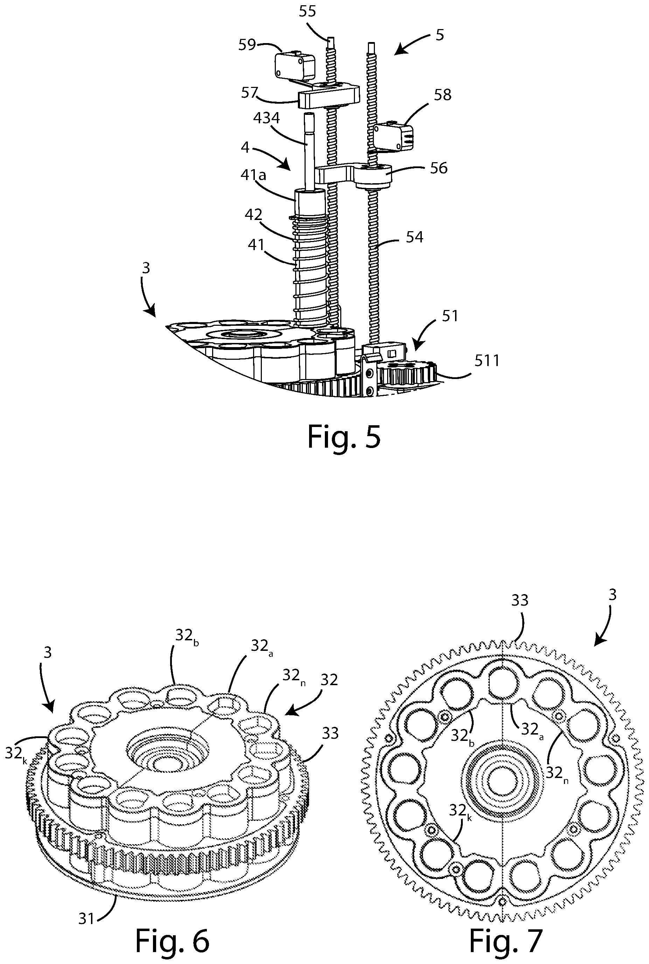

With reference to Figures 6 and 7, said supporting member 3 comprises a fixed portion 31, coupled to said base 1 and a movable portion 32, coupled in rotation to said fixed portion 31.

A plurality of housings 32_{a,b,...,k,...n} are made in said movable portion 32 and there is a circular gearwheel 33, designed to couple with said actuation means 5, as described in detail below.

Said plurality of housings 32_{a,b,...,k,...n} may have a variable number.

In this embodiment, thirteen housings are made in said supporting member 3, so as to carry out a predetermined number of sampling operations distributed over a predetermined period of time, for example one sampling every two hours.

Each housing of said plurality of housings 32_{a,b,...,k,...n} houses a sampling element 4.

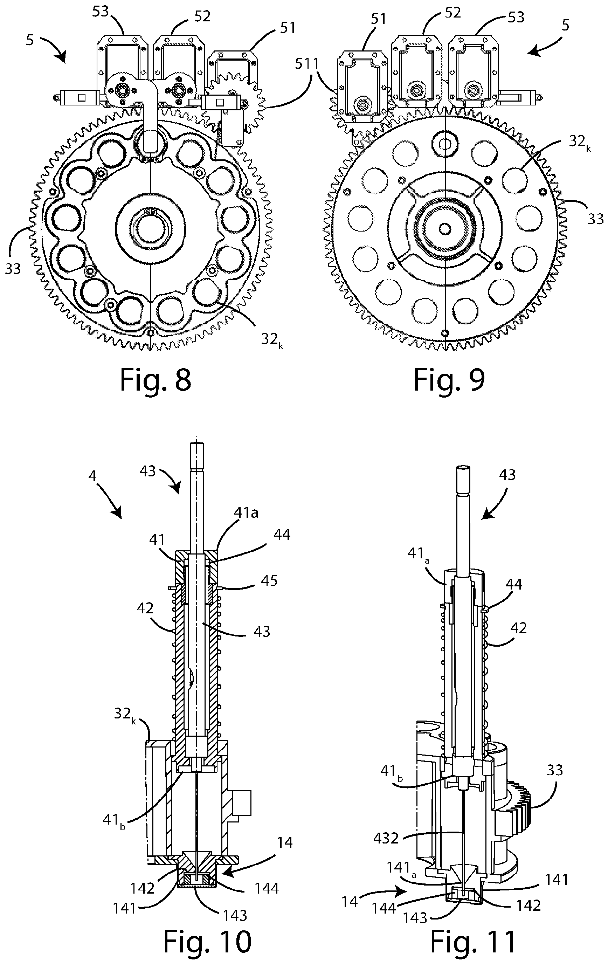

With reference to Figures 10 to 13, said sampling element 4 essentially comprises a hollow and elongated outer casing 41, a spring 42 extending along the entire surface of outer casing 41 and a sampling means 43 or SPME *holder,* placed inside said outer casing 41.

Said outer casing 41 is equipped with a first 41ₐ and a second 41_{b} end.

At said first end 41ₐ, a blocking element 44 is placed, inside said outer casing 41, to block said sampling means 43, when inserted in said outer casing 41.

Whilst a contact element 45 is located at said first end 41ₐ outside said outer casing 41.

Said outer casing 41 is able to move in a vertical direction to move from a raised position with respect to the housing 32ₖ, in which said spring 42 is extended, to a lowered position, wherein it is placed partially or totally inside said housing 32ₖ and wherein said spring 42 is compressed and said contact element 45 is in contact at the top of said housing 32ₖ.

With reference to Figure 12, said sampling means 43 or SPME holder is of known type and comprises an elongated, substantially cylindrical container 431 equipped with a first end 431ₐ and a second end 431_{b}.

A 432 needle is placed inside said container 431, designed to slide inside said container 431 and comprising inside it an SPME fibre 432'.

Said 432 needle has a first 432ₐ and a second 432_{b} end.

At said first end 432ₐ is coupled a return spring 433 of said fibre 432', whilst from said second end 432_{b} comes out said fibre 432', as described in detail below.

Said sampling means 43 also comprises a plunger 434 slidably coupled to said container 431, and able to compress said spring 433 for the escape of said fibre 432' from said needle 432.

With reference now to Figures 5, 8 and 9, said actuation means 5 essentially comprise a first motor 51, a second motor 52, a third motor 53, a first worm screw 54, coupled to said second motor 52, a second worm screw 55, coupled to said third motor 53, a first lever 56, coupled to said first worm screw 54, a second lever 57, coupled to said second worm screw 55, a first safety switch 58, coupled to said first worm screw 54 and a second safety switch 59, coupled to said second worm screw 55.

Said first lever 56 is able to move along said first worm screw 54 from a stroke start position, in which it is distant from said first end 41ₐ of said outer casing 41, to a stroke end position, in which it is in contact with said first end 41ₐ.

Said second lever 57 is also able to move along said second worm screw 55 from a stroke start position, where it is far from said plunger 434 of said sampling means 43, to a stroke end position, where it is in contact with said plunger 434.

Said first motor 51 is equipped with a gearwheel 511.

Said gear wheel 511 of said first motor 51 and said circular gear wheel 33 of said movable supporting member 3 are meshed together. to form a gearing, so as to rotate said movable supporting member 3 until reaching a predetermined position.

Said second motor 52 is able rotate said first worm screw 54, translating the axial motion into linear motion, so as to move said first lever 56 up and down along said first worm screw 54.

In the descent step, said first lever 56 is able to exert a thrust force on said first end 41ₐ of said outer casing 41, downwards.

Said third motor 53 is able rotate said second worm screw 55, translating the axial motion into linear motion, so as to move said second lever 57 up and down along said second worm screw 55.

During the descent step, said second lever 57 is able to exert a thrust force on said plunger 434 which, in turn, exerts a thrust force on said return spring 433 which causes said SPME fibre 432' to escape from said needle 432, as described in detail below.

Said first 51, second 52 and third 53 motors are servomotors of digital type and each one is equipped with a microprocessor programmed to drive the motor itself and precisely control its position by means of a feedback circuit, a position sensor and a known algorithm of PID (Proportional Integral Derivative) type.

The operation program of each servomotor can be modified from outside using a USB-type connection module.

Said first 58 and second 59 safety switches are mechanical switches which are pressed when a predetermined end of stroke position is reached.

Said device D has dimensions of approximately 40x20 cm and a height of 30 cm, and has a weight of less than 10 kg and is made externally in aluminium.

Said actuation means 5 move according to the instructions sent by said logic control unit, according to the predetermined program.

Said logic control unit can also interface with external sources which are able to modify the steps of said predetermined program, contained in said logic control unit.

Said device D comprises an RTC - *Real Time Clock* which turns on said device D at predetermined time intervals and then it turns off after the programmed measurement.

The device D is also equipped with a USB connection module.

The operation of the device D for the automatic sampling of organic contaminating compounds dispersed in gaseous fluids and/or liquids, which is the object of the invention, as described above is carried out as follows.

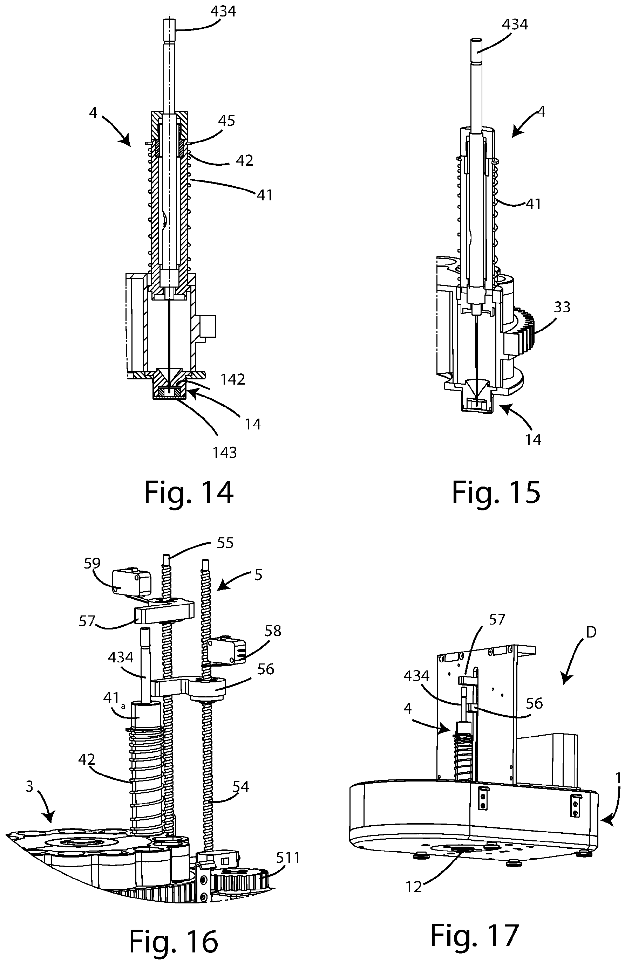

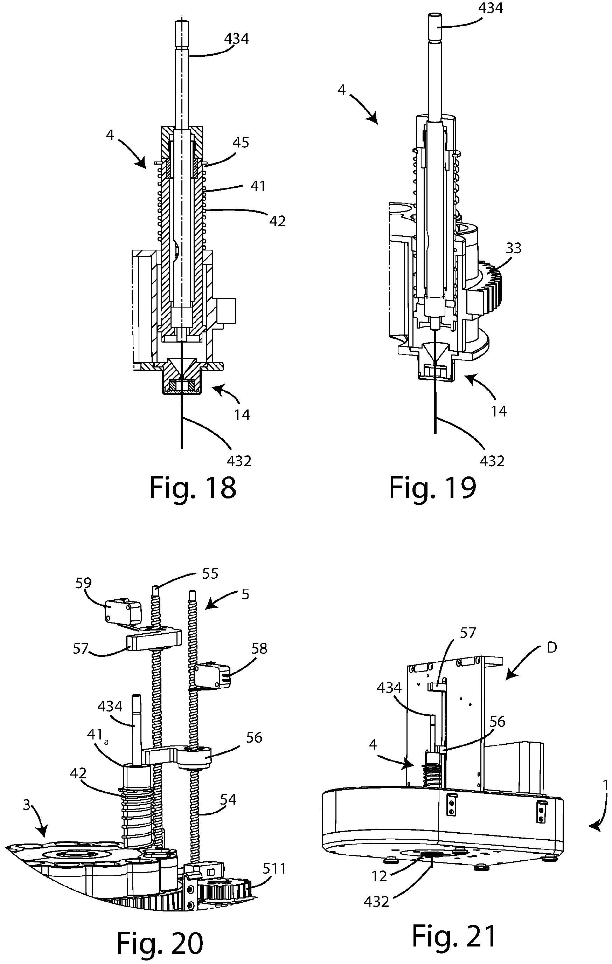

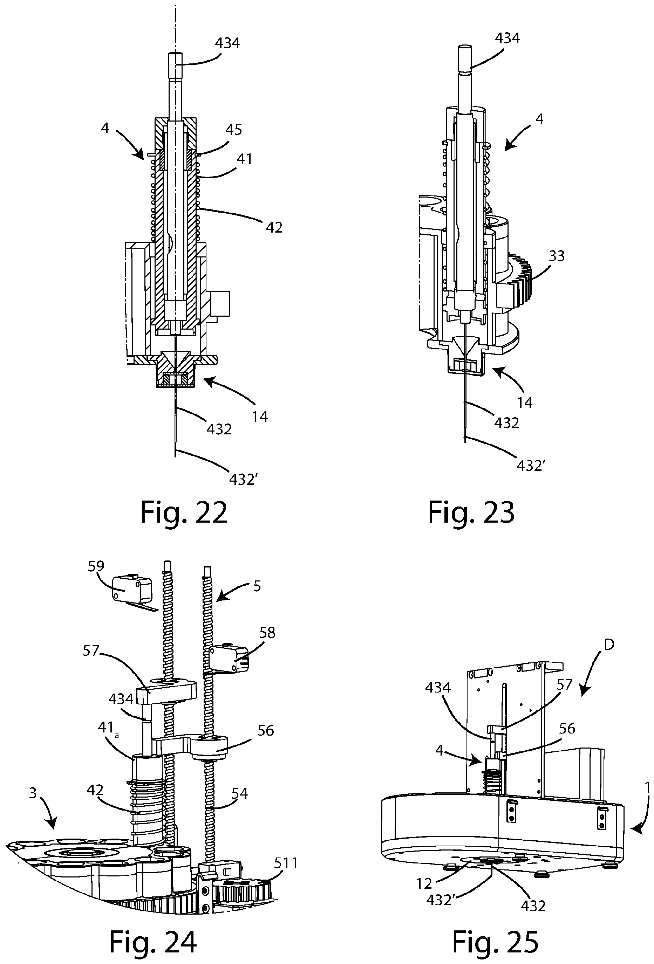

With reference in particular to Figures 14 to 25, when it is necessary to carry out automatic sampling of organic compounds dispersed in a predetermined fluid by means of said device D, this is activated.

Initially, said movable supporting member 3 is stationary, said one or more sampling elements 4 housed, in corresponding number, in said plurality of housings 32_{a,b,...,k,....n} are in the extracted position with respect to said plurality of housings 32_{a,b,...,k,...n}, said needle 432 is in said watertight chamber 14 and said fibre 432' is inserted in said needle 432.

The default program contained in said logic control unit controls the drive of said first motor 1.

In a first step, said first motor 1 rotates said movable gearwheel 33, so said movable portion 32 rotates with respect to said fixed portion 31, until a predetermined housing 3ₖ of said plurality of housings 32_{a,b,...,k,...n} reaches said watertight chamber 14.

In a second step, said second motor 52 rotates said first worm screw 54, translating the axial motion into linear motion, so as to move said first lever 56 down along said first worm screw 54.

In the descent step, said first lever 56 exerts a thrust force on said first end 41ₐ of said outer casing 41, downwards, pushing said outer casing 41 downwards, so that said needle 432 perforates said first membrane 142.

Said needle 432 remains between said first 142 and second 143 membrane for a predetermined time.

Subsequently, said first lever 56 continues to move to the stroke end position, causing the perforation of said second membrane 143 by said needle 432 which escapes from said device through said through hole 12.

In a third step, said third motor 53 rotates said second worm screw 55, translating the axial motion into linear motion, so as to move said second lever 57 down along said second worm screw 55.

During the descent step, said second lever 57 exerts a thrust force on said plunger 434 which, in turn, exerts a thrust force on said return spring 433 which causes said SPME fibre 432' to escape from said needle 432, when said lever 57 has reached the end of stroke position.

Said SPME fibre 432' remains exposed in the sampling environment for a predetermined time.

At the end of the exposure time of said SPME fibre 432', determined by the program contained in the logic control unit, said SPME fibre 432' is retracted inside said needle 432' which withdraws inside said watertight chamber 14.

The exposure speed of said SPME fibre 432' can be set by the logic control unit and can allow the exposure of said fibre 432' with a speed in the order of magnitude of millimetres per minute or all together with a speed of approximately 10 mm per second.

However, the choice of exposure speed depends on the type of contaminating substance to be sampled in the sampling environment or whether spot or time-averaged sampling is to be performed.

Subsequently, all the components of said device D return to the rest position making movements opposite to those just described.

In particular, said third motor 53 turns in the opposite direction with respect to the previous one, said second worm screw 55 rotates in the opposite direction, said second lever 57 returns to the stroke start position and said return spring 433 recalls said fibre 432' in said needle 432.

Subsequently, said second motor 52 turns in the opposite direction with respect to the previous one, said first worm screw 54 rotates in the opposite direction, said first lever 56 returns to the stroke start position and said spring 42 recalls said needle 432 in said watertight chamber 14.

Finally, said first motor 51 turns in the opposite direction to the previous one and returns to the initial position, until it receives a new pulse to bring a housing 32ₖ of said plurality of housings 32_{a,b,...,k,...n} to said through hole 12.

The movement of said plurality of housings 32_{a,b,...,k,...n} is determined by a sequence, not necessarily ordered from one to thirteen, stored in said control program.

The logic control unit is equipped with a program for the operation of said device D.

The operating steps of the programme are as follows:
a. Resetting step
   The microprocessor of the logic control unit returns said first 51, second 52 and third 53 motors to the initial position stored in the program;
b. Step for selecting SPME fibre 432' to be used to perform the measurement;
c. Step for extracting the tip of the needle 432', within which the selected SPME 432' fibre is located, to the outside of device D, at a predetermined speed;
d. Step for exposing the SPME fibre 432' to the outside environment at a predetermined speed;
e. Step for retracting the SPME fibre 432' inside the needle 432 and the needle 432 inside the device D;
f. Sleep step of the duration of a predetermined time interval, in which said device D does not perform any movement;
g. Shutdown step wherein said device D is in a *stand-by* mode.

Additional secondary functions are used to select date and time to wake up the device D, to read and write parameters from the microprocessor's non-volatile memory, and the like.

When a program is started, the microprocessor performs the following steps:
A. checking the status of a button located in the logic control unit; if it is pressed then you enter the waiting status for a command from the PC, otherwise it continues;
B. resetting the program counter;
C. executing the command from the non-volatile memory in the position identified by the program counter;
D. if there are no errors, increasing the program counter;
E. returning to step 3 to execute the next command;
F. The process continues until the system *shutdown* command is executed.

As can be seen from the above description, said device D allows a technique for sampling organic contaminants in-situ which is currently manual to be rendered automatic, determined by a *trigger* of an electronic sensor.

Moreover, said D is light, easy to handle and electrically self-contained, using the battery B.

The availability of thirteen or more housings makes it possible to monitor the air, or more generally a gaseous fluid or liquid, of a contaminated site being able to schedule the time, the day of exposure of the SPME fibre without the presence of personnel during the exposure time.

Moreover, the presence of said watertight chamber 14, in which said needle 432' and said fibre 432' may reside, before and after exposure in the sampling environment, it is possible to carry out chemical analysis even after 24 or 48 hours.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A device (D) for the sampling of organic contaminating compounds dispersed in gaseous fluids and/or liquids comprising at least one sampling means (43) comprising at least one fibre (432') capable of moving from a retracted position, in which it is placed inside said sampling means (43), to an extracted position, in which it is immersed in said fluid, in order to detect said organic contaminating compounds, according to predetermined exposure times of said fibre (432') in said fluid, said device (D) being **characterised**
**in that** it comprises actuation means (5) for moving said fibre (432') from said retracted position to said extracted position and vice versa,
**in that** it comprises a supporting member (3), equipped with two or more housings (32_{a,b, k,...n}), each configured to house a respective sampling means (43),
**in that** said actuation means (5) are configured to move a fibre (432') housed in a first housing (32ₐ) from said retracted position to said extracted position and vice versa, and to move subsequently a fibre (432') housed in a second housing (32ₖ) from said retracted position to said extracted position and vice versa, and
**in that** said supporting member (3) is arranged and rotatably coupled to said actuation means (5) such that, upon rotation of said supporting member (3), each one of said plurality of housings (32_{a,b, k,...n}) can be brought into a position where said actuation means (5) are capable to contact said sampling means (43) housed in the respective housing and are capable to move the respective fibre (432') into said extracted and retracted position.

2. The device (D) according to the preceding claim, **characterised in that** it comprises a logic control unit (U) equipped with a program containing predetermined exposure times, capable of activating said actuation means (5) to cause the exposure of said at least one fibre (432') in said fluid for said predetermined exposure time intervals.

3. The device (D) according to the preceding claim, **characterised in that** said program of said logic control unit (U) controls the exposure times of all the fibres (432') contained in said housings (32_{a,b, k,...n}).

4. The device (D) according to any one of claims 2 or 3, **characterised in that** said supporting member (3) comprises
a fixed portion (31),
a movable portion (32) provided with two or more housings (32_{a,b, k,...n}), able to rotate with respect to said fixed portion (31),
a circular gearwheel (33) integral with said movable portion (32), to couple with said actuation means (5).

5. The device (D) according to any one of the preceding claims, **characterised in that** said actuation means (5) comprise
a first motor (51), equipped with a gear wheel (511), a second motor (52), a third motor (53), a first worm screw (54), coupled to said second motor (52), a second worm screw (55), coupled to said third motor (53), and
a first lever (56), able to move along said first worm screw (54) from a stroke start position to a stroke end position, and a second lever (57), able to move along said second worm screw (55) from a stroke start position to a stroke end position.

6. The device according to the preceding claim, when dependent on claim 4, **characterised in that** said gear wheel (511) of said first motor (51) and said circular gear wheel (33) of said movable supporting member (3) are meshed together, so as to rotate said movable supporting member (3) until reaching a predetermined position.

7. The device (D) according to any one of the preceding claims, **characterised in that**
it comprises a sampling element (4) comprising
a hollow, elongated outer casing (41), comprising said sampling means (43), equipped with a first (41a) and a second (41b) end, capable of moving in a vertical direction from a raised to a lowered position, and
a spring (42), coupled to said outer casing (41), capable of being extended, when said outer casing (41) is in said raised position, and compressed, when said outer casing (41) is in said lowered position, and
**in that** said sampling means (43) comprises a container (431), a plunger (434), which is coupled to said container (431), a needle (432), placed inside said container (431) and containing said fibre (432'), and a spring (433), which is coupled to said plunger for the escape of said fibre (432') from said needle (432).

8. The device (S') according to any one of claims 5 to 7, **characterised in that**
said first lever (56), in said stroke start position is distant from said first end (41ₐ) of said outer casing (41), and in said stroke end position is in contact with said first end (41ₐ) of said outer casing (41), for the escape of said needle (432) from said container (431), and
said second lever (57), in said stroke start position is distant from said plunger (434) of said sampling means (43), and in said stroke end position is in contact with said plunger (434) for the escape of said fibre (432') from said needle (432).

9. The device (D) according to any one of the preceding claims, **characterised in that** each housing (32_{a, b, k,...n}) of said supporting member (3) is equipped with a watertight chamber (14) comprising
a containment structure (141), in which a through hole (141ₐ) is formed,
a first membrane (142), located under said through hole (141ₐ),
a second membrane (143), located under said first membrane (142), and
a spacer element (144), interposed between said first (142) and second (143) membrane.

10. The device (D) according to the preceding claim, when dependent on claim 7, **characterised in that** said first (142) and second (143) membrane are made of elastic plastic material, which can be passed through by said needle (432).

11. A method of operation of a device (D) for the sampling of organic contaminating compounds dispersed in gaseous fluids and/or liquids according to claims 1 to 10, comprising the following steps:
a. moving said first (51), second (52) and third (53) motors to an initial position;
b. selecting the fibre (432') to take the measurement;
c. extracting the tip of the needle (432) corresponding to the selected fibre out of the device (D), at a predetermined speed;
d. exposing said selected fibre (432') in the outside environment at a predetermined speed;
e. retracting said fibre (432') inside said needle (432) and said needle (432) inside said device (D);
f. stopping said device (D) for a predetermined period of time.

## Patentansprüche

1. Eine Vorrichtung (D) für die Probenahme von organischen Schadstoffen, die in gasförmigen Flüssigkeiten und/oder Flüssigkeiten dispergiert sind, mit mindestens einer Probenahmeeinrichtung (43), die mindestens eine Faser (432') umfasst, die sich aus einer eingezogenen Position, in der sie sich innerhalb der besagten Probenahmeeinrichtung (43) befindet, in eine ausgefahrene Position bewegen kann, in der sie in die besagte Flüssigkeit eingetaucht ist, um die besagten organischen Verunreinigungen nach vorher festgelegten Expositionszeiten der besagten Faser (432') in der besagten Flüssigkeit nachzuweisen, wobei die besagte Vorrichtung (D) **dadurch gekennzeichnet ist, dass** sie eine Betätigungseinrichtung (5) zum Bewegen der besagten Faser (432') aus der besagten eingefahrenen in die besagte ausgefahrene Stellung umfasst und umgekehrt, dass sie ein Stützelement (3) umfasst, ausgestattet mit zwei oder mehr Gehäusen (32_{a,b,k...n}), und jedes ist so konfiguriert, dass es ein entsprechendes Probenahmemittel (43) beherbergt, dass die besagten Betätigungseinrichtungen (5) konfiguriert sind, eine Faser (432') in einem ersten Gehäuse (32ₐ) aus der besagten eingefahrenen Position in die besagte ausgefahrene Position und umgekehrt zu bewegen; und anschließend eine Faser (432') in einem zweiten Gehäuse (32ₖ) aus der besagten eingefahrenen Position in die besagte ausgefahrene Position und umgekehrt zu bewegen, dass das besagte Stützelement (3) derart angeordnet und drehbar mit der besagten Betätigungseinrichtung (5) verbunden ist, dass bei Drehung des besagten Stützelements (3) jedes der besagten Mehrzahl von Gehäusen (32_{a,b,k,...n}) in eine Stellung gebracht werden kann, in der die besagten Betätigungseinrichtungen (5) die im jeweiligen Gehäuse befindlichen besagten Probenahmemittel (43) berühren und die entsprechende Faser (432') in die besagte ausgefahrene und eingezogene Position bewegen können.

2. Vorrichtung (D) nach dem vorhergehenden Anspruch, **dadurch gekennzeichnet, dass** sie eine Logiksteuereinheit (U) umfasst, die mit einem Programm ausgestattet ist, das vorher festgelegte Expositionszeiten enthält, geeignet, die besagte Betätigungseinrichtung (5) zu aktivieren, um die Exposition der besagten mindestens einen Faser (432') in der Flüssigkeit für die besagten vorher festgelegten Expositionszeitintervalle auszulösen.

3. Vorrichtung (D) nach dem vorhergehenden Anspruch, **dadurch gekennzeichnet, dass** das besagte Programm der besagten Logiksteuereinheit (U) die Expositionszeiten aller Fasern (432') in den besagten Gehäusen (32ₐ,_{b},ₖ...ₙ) steuert.

4. Vorrichtung (D) nach einem der Ansprüche 2 oder 3, **dadurch gekennzeichnet, dass** das besagte Stützelement (3) umfasst: einen festen Teil (31), einen beweglichen Teil (32) mit zwei oder mehr Gehäusen (32_{a,b,k...n}), der sich in Bezug auf den besagten festen Teil (31) drehen kann, und ein kreisförmiges Zahnrad (33), das in den besagten beweglichen Teil (32) integriert ist, um sich mit den besagten Betätigungsmitteln (5) zu koppeln.

5. Vorrichtung (D) nach einem der vorhergehenden Ansprüche, **dadurch gekennzeichnet, dass** die besagte Betätigungseinrichtung (5) umfasst: einen ersten Motor (51), bestückt mit einem Zahnrad (511), einen zweiten Motor (52), einen dritten Motor (53), eine erste Schneckenschraube (54), die mit dem besagten zweiten Motor (52) gekoppelt ist, eine zweite Schneckenschraube (55), die mit dem besagten dritten Motor (53) gekoppelt ist, und einen ersten Hebel (56), der sich entlang der besagten ersten Schneckenschraube (54) von der Anfangsposition in die Endposition des Hubs bewegen kann, und einen zweiten Hebel (57), der sich entlang der besagten zweiten Schneckenschraube (55) von der Anfangsposition in die Endposition des Hubs bewegen kann.

6. Vorrichtung nach dem vorhergehenden Anspruch, sofern abhängig von Anspruch 4, **dadurch gekennzeichnet, dass** das besagte Zahnrad (511) des besagten ersten Motors (51) und das besagte kreisförmige Zahnrad (33) des besagten beweglichen Stützelements (3) miteinander in Eingriff stehen, um das besagte bewegliche Stützelement (3) zu drehen, bis es eine vorbestimmte Stellung erreicht.

7. Vorrichtung (D) nach einem der vorhergehenden Ansprüche, **dadurch gekennzeichnet, dass** sie ein Probenahmeelement (4) umfasst, das ein hohles, längliches Außengehäuse (41) umfasst, das die besagte Probenahmeeinrichtung (43) umfasst, mit einem ersten Ende (41a) und einem zweiten Ende (41b), in der Lage, sich in vertikaler Richtung von einer angehobenen in eine abgesenkte Position zu bewegen, und eine Feder (42), die an das besagte äußere Gehäuse (41) gekoppelt ist und ausgezogen werden kann, wenn sich das besagte äußere Gehäuse (41) in der besagten angehobenen Position befindet, und zusammengedrückt, wenn sich das besagte äußere Gehäuse (41) in der besagten abgesenkten Position befindet, und besagte Probenahmeeinrichtung (43) umfasst einen Behälter (431), einen Kolben (434), der mit dem besagten Behälter (431) verbunden ist, eine Nadel (432), die sich in dem besagten Behälter (431) befindet und die besagte Faser (432') enthält, und eine Feder (433), die an den besagten Kolben gekoppelt ist, damit die besagte Faser (432') aus der besagten Nadel (432) entlassen werden kann.

8. Vorrichtung (S') nach einem der Ansprüche 5 bis 7, **dadurch gekennzeichnet, dass** besagter erster Hebel (56) in der besagten Startposition des Hubs vom besagten ersten Ende (41ₐ) des besagten äußeren Gehäuses (41) entfernt ist, und in der besagten Endposition des Hubs mit dem besagten ersten Ende (41ₐ) des besagten äußeren Gehäuses (41) in Kontakt ist, um die besagte Nadel (432) aus dem besagten Behälter (431) freizugeben, und besagter zweiter Hebel (57) ist in der besagten Ausgangsposition des Hubs von dem besagten Kolben (434) des besagten Probenahmemittels (43) entfernt und in der besagten Endposition des Hubs mit dem besagten Kolben (434) in Kontakt, um die besagte Faser (432') von der besagten Nadel (432) freizugeben.

9. Vorrichtung (D) nach einem der vorhergehenden Ansprüche, **dadurch gekennzeichnet, dass** jedes Gehäuse (32ₐ,_{b},ₖ...ₙ) des besagten Stützelements (3) mit einer wasserdichten Kammer (14) versehen ist, umfassend eine Umhüllung (141), in der sich ein Durchgangsloch (141ₐ) befindet, eine erste Membran (142) unter dem besagten Durchgangsloch (141ₐ), eine zweite Membran (143) unter der besagten ersten Membran (142), und ein Distanzelement (144), das sich zwischen der besagten ersten (142) und zweiten (143) Membran befindet.

10. Vorrichtung (D) nach dem vorhergehenden Anspruch, sofern abhängig von Anspruch 7, **dadurch gekennzeichnet, dass** die besagte erste (142) und zweite (143) Membran aus elastischem Kunststoff besteht, welchen die besagte Nadel (432) durchdringen kann.

11. Verfahren zur Bedienung einer Vorrichtung (D) zur Probenahme von organischen verunreinigenden Verbindungen, dispergiert in gasförmigen Flüssigkeiten und/oder Flüssigkeiten nach den Ansprüchen 1 bis 10, umfassend die folgenden Schritte:
a. Bewegen des besagten ersten (51), zweiten (52) und dritten (53) Motors zu einer Anfangsposition;
b. Auswahl der Faser (432') für die Messung;
c. Herausziehen der Nadelspitze (432), die der ausgewählten Faser entspricht, aus der Vorrichtung (D) mit einer vorgegebenen Geschwindigkeit;
d. Exposition der ausgewählten Faser (432') in der Außenumgebung mit einer voreingestellten Geschwindigkeit;
e. Zurückziehen der besagten Faser (432') in die besagte Nadel (432) und der besagten Nadel (432) in die besagte Vorrichtung (D);
f. Anhalten der besagten Vorrichtung (D) für eine vorher festgelegte Zeit.

## Revendications

1. Dispositif (D) d'échantillonnage de composés organiques contaminants dispersés dans des fluides gazeux et/ou liquides comprenant au moins un moyen d'échantillonnage (43) comprenant au moins une fibre (432') capable de se déplacer d'une position rétractée, dans laquelle elle est placée à l'intérieur dudit moyen d'échantillonnage (43), à une position extraite, dans laquelle elle est immergée dans ledit fluide, afin de détecter lesdits composés organiques contaminants, selon des temps d'exposition prédéterminés de ladite fibre (432') dans ledit fluide, ledit dispositif (D) étant **caractérisé en ce qu'**il comprend des moyens d'actionnement (5) pour déplacer ladite fibre (432') de ladite position rétractée à ladite position extraite et vice versa, **en ce qu'**il comprend un élément de support (3), équipé de deux ou plusieurs logements (32_{a,b,k,...n}), chacun configuré pour loger un moyen d'échantillonnage respectif (43), **en ce que** lesdits moyens d'actionnement (5) sont configurés pour déplacer une fibre (432') logée dans un premier logement (32ₐ) de ladite position rétractée à ladite position extraite et vice versa, et pour déplacer ensuite une fibre (432') logée dans un second logement (32ₖ) de ladite position rétractée à ladite position extraite et vice versa, et **en ce que** ledit élément de support (3) est disposé et couplé de manière rotative audit moyen d'actionnement (5) de sorte que, lors de la rotation dudit élément de support (3), chacun de ladite pluralité de logements (32_{a,b,k,..n}) peut être amené dans une position où lesdits moyens d'actionnement (5) sont capables d'entrer en contact avec lesdits moyens d'échantillonnage (43) logés dans le logement respectif et sont capables de déplacer la fibre respective (432') dans lesdites positions d'extraction et de rétraction.

2. Dispositif (D) selon la revendication précédente, **caractérisé en ce qu'**il comprend une unité de commande logique (U) équipée d'un programme contenant des temps d'exposition prédéterminés, capable d'activer lesdits moyens d'actionnement (5) pour provoquer l'exposition de ladite au moins une fibre (432') dans ledit fluide pendant lesdits intervalles de temps d'exposition prédéterminés.

3. Dispositif (D) selon la revendication précédente, **caractérisé en ce que** ledit programme de ladite unité de commande logique (U) contrôle les temps d'exposition de toutes les fibres (432') contenues dans lesdits logements (32_{a,b,k,...n}).

4. Dispositif (D) selon l'une quelconque des revendications 2 ou 3, **caractérisé en ce que** ledit organe de support (3) comprend une partie fixe (31), une partie mobile (32) pourvue de deux ou plusieurs logements (32_{a,b,k,...n}), aptes à tourner par rapport à ladite partie fixe (31), une roue dentée circulaire (33) solidaire de ladite partie mobile (32), pour s'accoupler avec lesdits moyens d'actionnement (5).

5. Dispositif (D) selon l'une quelconque des revendications précédentes, **caractérisé en ce que** lesdits moyens d'actionnement (5) comprennent un premier moteur (51), équipé d'une roue dentée (511), un deuxième moteur (52), un troisième moteur (53), une première vis sans fin (54), couplée audit deuxième moteur (52), une deuxième vis sans fin (55), couplée audit troisième moteur (53), et un premier levier (56), capable de se déplacer le long de ladite première vis sans fin (54) d'une position de début de course à une position de fin de course, et un second levier (57), capable de se déplacer le long de ladite deuxième vis sans fin (55) d'une position de début de course à une position de fin de course.

6. Dispositif selon la revendication précédente, lorsqu'il dépend de la revendication 4, **caractérisé en ce que** ladite roue dentée (511) dudit premier moteur (51) et ladite roue dentée circulaire (33) dudit élément de support mobile (3) sont engrenées ensemble, de manière à faire tourner ledit élément de support mobile (3) jusqu'à ce qu'il atteigne une position prédéterminée.

7. Dispositif (D) selon l'une quelconque des revendications précédentes, **caractérisé en ce qu'**il comprend un élément d' échantillonnage (4) comprenant une enveloppe extérieure creuse et allongée (41), comprenant ledit moyen d'échantillonnage (43), équipé d'une première (41a) et d'une deuxième (41b) extrémité, capable de se déplacer dans une direction verticale d'une position relevée à une position abaissée, et un ressort (42), couplé à ladite enveloppe extérieure (41), capable d'être étendu, lorsque ladite enveloppe extérieure (41) est dans ladite position relevée, et comprimé, lorsque ladite enveloppe extérieure (41) est dans ladite position abaissée, et **en ce que** ledit moyen d'échantillonnage (43) comprend un récipient (431), un piston (434), qui est couplé audit récipient (431), une aiguille (432), placée à l'intérieur dudit récipient (431) et contenant ladite fibre (432'), et un ressort (433), qui est couplé audit piston pour l'échappement de ladite fibre (432') de ladite aiguille (432).

8. Dispositif (S') selon l'une quelconque des revendications 5 à 7, **caractérisé en ce que** ledit premier levier (56), dans ladite position de début de course, est distant de ladite première extrémité (41ₐ) de ladite enveloppe extérieure (41), et dans ladite position de fin de course est en contact avec ladite première extrémité (41ₐ) de ladite enveloppe extérieure (41), pour l'échappement de ladite aiguille (432) dudit récipient (431), et ledit second levier (57), dans ladite position de début de course, est éloigné dudit piston (434) dudit moyen d'échantillonnage (43), et dans ladite position de fin de course est en contact avec ledit piston (434) pour l'échappement de ladite fibre (432') de ladite aiguille (432).

9. Dispositif (D) selon l'une quelconque des revendications précédentes, **caractérisé en ce que** chaque logement (32_{a,b,k,...n}) dudit élément de support (3) est équipé d'une chambre étanche (14) comprenant une structure de confinement (141), dans laquelle est ménagé un trou de passage (141ₐ) formé, une première membrane (142), située sous ledit trou de passage (141ₐ), une deuxième membrane (143), située sous ladite première membrane (142), et un élément d'espacement (144), interposé entre la première (142) et la deuxième (143) membrane.

10. Dispositif (D) selon la revendication précédente, lorsqu'il dépend de la revendication 7, **caractérisé en ce que** ladite première (142) et ladite deuxième (143) membrane sont constituées d'un matériau plastique élastique, qui peut être traversé par ladite aiguille (432) .

11. Méthode de fonctionnement d'un dispositif (D) d'échantillonnage de composés organiques contaminants dispersés dans des fluides gazeux et/ou liquides selon les revendications 1 à 10, comprenant les étapes suivantes :
a. amener les premier (51), deuxième (52) et troisième (53) moteurs à une position initiale;
b. sélectionner la fibre (432') pour effectuer la mesure;
c. extraire la pointe de l'aiguille (432) correspondant à la fibre sélectionnée hors du dispositif (D), à une vitesse prédéterminée;
d. exposer ladite fibre sélectionnée (432') dans l'environnement extérieur à une vitesse prédéterminée;
e. rétracter ladite fibre (432') à l'intérieur de ladite aiguille (432) et ladite aiguille (432) à l'intérieur dudit dispositif (D);
f. arrêter ledit dispositif (D) pendant une période prédéterminée.
